# EUROPEAN PATENT SPECIFICATION

(11) **EP 4 181 627 B1**
(45) Date of publication and mention of the grant of the patent: **05.08.2026**
(21) Application number: 22211762.4
(22) Date of filing: 23.09.2020
(51) Int. Cl.: H05B 6/06, H05B 6/12

(54) **INDUCTION HEATING TYPE COOKTOP WITH INCREASED HEATING STABILITY**
INDUKTIONSKOCHFELD MIT ERHÖHTER HEIZSTABILITÄT
PLAQUE DE CUISSON DE TYPE CHAUFFAGE PAR INDUCTION PRÉSENTANT UNE STABILITÉ DE CHAUFFAGE ACCRUE

(30) Priority: 18.02.2020 KR 20200019918
(43) Date of publication of application: 17.05.2023
(62) Divisional of application: 20197703.0
(73) Proprietor: LG Electronics Inc., Seoul 07336 (KR)
(72) Inventor: KWACK, Younghwan, Seoul (KR); SON, Seongho, Seoul (KR); JEON, Seonho, Seoul (KR); JI, Jongseong, Seoul (KR); CHO, Chuhyoung, Seoul (KR)
(74) Representative: Vossius & Partner Patentanwälte Rechtsanwälte mbB

(56) References cited:
- EP-A1- 1 489 479
- DE-A1- 102006 010 107
- JP-A- 2002 056 959

## Description

### CROSS-REFERENCE TO RELATED APPLICATION

The present disclosure claims priority to and the benefit of Korean Patent Application No. 10-2020-0019918, filed on February 18, 2020.

### TECHNICAL FIELD

The present disclosure relates to a cooktop for preventing a target heating object from being heated to a preset temperature or more in an induction heating process.

### BACKGROUND

Various types of cookware may be used to cook food at home or at restaurants. For example, gas ranges may use gas as fuel to heat food. In some examples, cooking devices may heat a target heating object such as a pot and a cooking vessel using electricity instead of gas.

Methods for electrically heating a target heating object may include a resistive heating method and an induction heating method. In the electrical resistive heating method, a target heating object may be heated based on current flowing through a metal resistance wire or a non-metallic heating element, such as Silicon Carbide (SIC), to generate heat which is then transferred to the target heating object (e.g., a cooking vessel) through a heat dissipation or heat transfer. In the induction heating method, a target heating object may be heated by eddy current generated in the target heating object made of a metal material, using an electrical field generated around a coil when a high frequency power having a predetermined magnitude is applied to the coil.

The induction heating method may be applied to cooktops. In some cases, a cooktop using the induction heating method may only heat an object made of a magnetic material. For example, when an object made of a nonmagnetic material (for example, heat-resistant glass, porcelain, etc.) is disposed on the cooktop, the cooktop may not heat the nonmagnetic material object.

In some cases, an induction heating device may include a heating plate disposed between a cooktop and a nonmagnetic object to heat the object. However, the aforementioned device may have problems including a low heating efficiency of the heating plate and a longer cooking time to heat ingredients contained in the nonmagnetic object.

In some cases, a hybrid cooktop may heat a nonmagnetic object through a radiant heater using an electrical resistive heating method, where a magnetic object disposed on the hybrid cooktop is heated through a working coil by induction. In some cases, the induction heating method is applied to such hybrid cooktops. However, the aforementioned method may have problems including a low output of the radiant heater and a low heating efficiency. A user of the hybrid cooktop may experience inconvenience from considering a material of a target heating object when the user needs to place the target heating object on the cooktop.

In some cases, an all-metal cooktop may heat a metal object (e.g., a nonmagnetic metal and a magnetic object). However, such all-metal cooktop may not heat a nonmagnetic and non-metallic object. In addition, a heating efficiency may be lower than a radiant heater technology and a material cost may be high.

Furthermore, a heating method employed in a conventional induction heated type cooktop may have been implemented only through a direct induction heating of a target heating object. Due to characteristics of the direct induction heating, the conventional induction heated type cooktop may not heat an object at a temperature exceeding an unacceptable temperature (e.g., 300°C or higher). Thus, the conventional induction heated type cooktop included a conventional temperature sensor (e.g., a thermistor) suitable for heating a target object in an expected temperature range.

A resistance value of the thermistor included in the conventional cooktop may change based on a temperature, enabling the thermistor to measure a temperature based on the changed in the resistance value. However, due to the characteristics of elements included in the thermistor, the change in the resistance value may not be significant when the temperature reaches 100°C or higher. Thus, an additional circuit (e.g., a resistance change circuit) for distributing resistance values for specifying the temperature may be required for each thermistor. Moreover, the thermistor may require a delay time (e.g., thermal time constant) until a detected temperature value matches an actual temperature value.

The conventional cooktop may further include a thin film which is a separate component to be inductively heated. In some cases, the conventional cooktop may heat a target heating object directly when the target heating object is a magnetic material, which can be inductively heated. In some cases, the conventional cooktop may use a separate induction heated thin film to heat the target heating object indirectly by using a heat transmitted from the thin film when the target heating object cannot be inductively heated. However, when the target heating object cannot be inductively heated, a heat transfer efficiency may be reduced when compared to a case in which the target heating object is inductively heated. Thus, the induction heated thin film needs to be heated to a higher temperature (e.g., 600°C) than a temperature of the heat applied to the target heating object which can be inductively heated.

In some cases, if a cooktop is heated to about 600°C or more through the inductive heating of the induction heated thin film, due to a rapid increase in temperature, a significantly large error may occur when the thermistor measures the temperature and may lead to a damage to a component of the cooktop.

In the conventional cooktop, an eccentricity of a target object may be determined based on a change pattern of an electrical parameter generated due to the eccentricity of the target heating object. For example, if high-temperature heating occurs from the eccentricity of the target heating object, the cooktop may be damaged. Thus, an output control based on accurate recognition of the eccentricity of the target heating object may be required to stabilize a use of the cooktop.

In some cases, the conventional cooktop including the thin film may have difficulties, due to a thickness of the thin film, to determine the eccentricity based on the change pattern of the electrical parameter viewed from the cooktop even if a metal target heating object is placed on an upper plate of the cooktop. As described above, the thin film may be heated to a considerable temperature for the heat transfer efficiency, so the recognition of the eccentricity is an important function of the cooktop. However, a change in electrical parameter may be tenuous due to the thin film disposed on the cooktop even if the target heating object is placed on the upper plate of the cooktop. In such cases, the change in electrical parameter may not be used for determining the eccentricity of the target heating objects.

### SUMMARY

The present disclosure is directed to an induction heated type cooktop capable of heating both magnetic and non-magnetic objects.

The present disclosure also describes an induction heated type cooktop that can prevent an upper plate from being damaged when a thin film (or thin layer) is rapidly induction heated to a high temperature.

According to one aspect of the subject matter described in this application, an induction heating type cooktop includes an upper plate coupled to a top of a case, the upper plate being configured to support a target object, a working coil provided in the case and configured to heat the target object, a thin film disposed on at least one of a top of the upper plate or a bottom of the upper plate, a first temperature sensor configured to measure a temperature of the thin film, a second temperature sensor configured to measure a temperature of the upper plate, and a microcontroller unit (MCU) configured to (i) control the working coil to heat the target object based on a target output, and (ii) control an output of the working coil based on the measured temperature of the thin film and the measured temperature of the upper plate.

Implementations according to this aspect may include one or more of the following features. For example, the first temperature sensor may be configured to measure a temperature of a portion of the thin film overlapping the upper plate, and the second temperature sensor may be configured to measure a temperature of a portion of the upper plate not overlapping the thin film.

In some implementations, the thin film may include a hole in a central portion, and the second temperature sensor may be configured to measure the temperature of the upper plate through the hole based on the thin film being disposed on the bottom of the upper plate.

In some examples, the hole may have a predetermined radius.

In some examples, the portion of the upper plate measured by the second temperature sensor may be spaced apart above a predetermined distance from a boundary of the overlapping portion between the thin film and the upper plate.

In some implementations, the first temperature sensor may be configured to measure the temperature of the thin film using a thermocouple. In some examples, the first temperature sensor may be configured to measure temperatures of a plurality of portions of the thin film. In some examples, the MCU may be configured to determine whether to maintain the output of the working coil to be the target output or reduce the output based on at least one of the measured temperature of the thin film or the measured temperature of the upper plate.

In some implementations, the MCU may be configured to determine whether to maintain the output of the working coil to be the target output or reduce the output based on whether the measured temperature of the thin film is higher than or equal to a first threshold temperature. In some examples, the MCU may be configured to determine whether to maintain the output of the working coil to be the target output or reduce the output based on whether the measured temperature of the upper plate is higher than or equal to a second threshold temperature.

In some examples, the MCU may be configured to determine whether to maintain an output of the working coil to be the target output or reduce the output based on (i) whether the measured temperature of the thin film is higher than or equal to a first threshold temperature, and (ii) whether the measured temperature of the upper plate is higher than or equal to a second threshold temperature, and the first threshold temperature may be higher than the second threshold temperature. In some examples, the MCU may be configured to determine whether to maintain an output of the working coil to be the target output or reduce the output based on the first threshold temperature and the second threshold temperature, and each of the first threshold temperature and the second threshold temperature may include at least one threshold temperature.

In some implementations, the MCU may be configured to suspend an operation of the working coil based on the temperature of the thin film being higher than or equal to a predetermined first threshold temperature or the temperature of the upper plate being higher than or equal to a predetermined second threshold temperature.

In some examples, the MCU may be configured to suspend an operation of the working coil or maintain the output to be the target output based on whether the measured temperature of the thin film is lower than the measured temperature of the upper plate. In some examples, the MCU may be configured to (i) maintain the output for a predetermined time in response to a determination that the measured temperature of the thin film is lower than the temperature of the upper plate, and (ii) suspend the operation of the working coil in response to a determination that a temperature of the thin film is lower than a temperature of the upper plate after the predetermined time elapses.

In some implementations, a thickness of the thin film is less than a skin depth of the thin film.

According to another aspect of the subject matter described in this application, a method of controlling an output of a working coil to heat a target object is provided. The method may include receiving, from a first temperature sensor, a measured temperature of a thin film disposed on at least one of a top of an upper plate or a bottom of the upper plate, receiving, from a second temperature sensor, a measured temperature of the upper plate, the upper plate holding the target object, and controlling the output of the working coil based on the measured temperature of the thin film and the measured temperature of the upper plate.

Implementations according to this aspect may include one or more following features. For example, the method may further include determining whether to maintain an output of the working coil to be a target output or reduce the output based on (i) whether the measured temperature of the thin film measured by the first temperature sensor is higher than or equal to a first threshold temperature, and (ii) whether the measured temperature of the upper plate measured by the second temperature sensor is higher than or equal to a second threshold temperature. In some examples, the first threshold temperature may be higher than the second threshold temperature.

In some implementations, the method may further include suspending an operation of the working coil based on the measured temperature of the thin film being higher than or equal to a predetermined first threshold temperature or the measured temperature of the upper plate being higher than or equal to a predetermined second threshold temperature. In some examples, the method may further include suspending an operation of the working coil or maintaining the output to be a target output based on whether the measured temperature of the thin film is lower than the measured temperature of the upper plate.

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

### DESCRIPTION OF THE DRAWINGS

The above and other aspects, features, and advantages of certain implementations will be more apparent from the following detailed description taken in conjunction with the accompanying drawings, in which:
FIG. 1 is a diagram illustrating an example of an induction heating type cooktop.
FIG. 2 is a diagram illustrating exemplary elements disposed in the induction heating type cooktop of FIG. 1.
FIGS. 3 and 4 are diagrams illustrating examples of a thickness of a thin film and a skin depth of the thin film of the induction heating type cooktop of FIG. 1.
FIGS. 5 and 6 are diagrams illustrating examples of an electric impedance between a thin film and a target heating object based on a type of the target heating object.
FIG. 7 is a diagram illustrating another example of an induction heating type cooktop.
FIG. 8 is a diagram illustrating exemplary elements provided in the induction heating type cooktop of FIG. 7.
FIG. 9 is a diagram illustrating an exemplary target heating object provided on the induction heating type cooktop of FIG. 7.
FIG. 10 is an exemplary block diagram illustrating a cooktop measuring temperatures of a thin film and an upper plate to control an output.
FIG. 11 illustrates an exemplary implementation of the cooktop of FIG. 10 including a temperature sensor configured to measure a temperature of a heated portion.
FIG. 12 illustrates another exemplary implementation of the cooktop of FIG. 10 including a temperature sensor configured to measure a temperature of a heated portion.
FIG. 13 illustrates another exemplary implementation of the cooktop of FIG. 10 including a temperature sensor configured to measure temperatures of thin films.
FIG. 14 illustrates an exemplary method of arranging a first temperature sensor and a second temperature sensor to measure a temperature of at least one of an upper plate or a thin film disposed on a top of the upper plate.
FIG. 15 illustrates another exemplary method of arranging a temperature sensor to measure a temperature of heating by a thin film disposed at a bottom of an upper plate.
FIG. 16 illustrates another exemplary method of arranging a temperature sensor to measure a temperature of heating by thin films disposed at a top and a bottom of an upper plate.
FIG. 17 illustrates an exemplary of measuring a temperature of heating from a thin film by using a thermocouple.
FIG. 18 illustrates an exemplary process for controlling a working coil based on a measured temperature by a controller.
FIG. 19 is a flowchart illustrating an exemplary method of controlling an output based on whether a temperature measured by each of a plurality of thermocouples excesses a threshold temperature.
FIG. 20 is a flowchart illustrating an exemplary method of controlling an output based on whether a temperature measured through each of a plurality of thermocouples excesses a threshold temperature and at least one of differences between temperatures measured through the plurality of thermocouples excesses a threshold difference.

### DETAILED DESCRIPTION

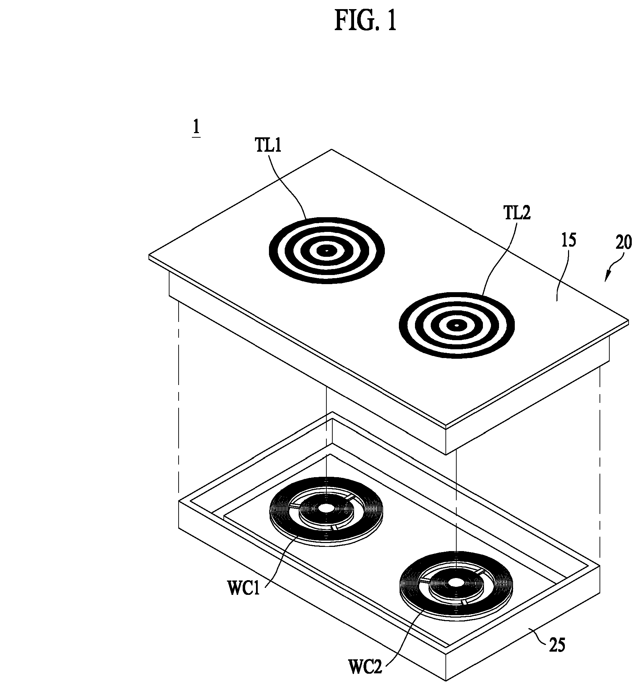

Referring to FIG. 1, an induction heating type cooktop 1 may include a case 25, a cover plate 20, working coils WC1 and WC2, and thin films TL1 and TL2. The working coils WC1 and WC2 may be installed in the case 25.

In some implementations, various devices may be disposed in the case 25 and configured to actuate the working coils WC1 and WC2. For example, the devices for actuating the working coils may include a power unit for providing alternating current power, a rectifying unit for rectifying the alternating current power from the power unit to direct current power, an inverter for inverting the direct power rectified by the rectifying unit to a resonance current through a switching operation, a control unit for controlling operations of the various devices in the induction heating type cooktop 1, a relay or a semi-conductor switch for turning on and off a working coil, and other suitable parts.

The cover plate 20 may be coupled to a top of the case 25, and may include an upper plate 15 for placing a target object to be heated on the top. For example, the cover plate 20 may include the upper plate 15 for placing a target object to be heated, such as a cooking vessel. In some implementations, the upper plate 15 may be made of a glass material (e.g., ceramic glass).

In some implementations, an input interface may be provided in the upper plate 15 to receive an input from a user and transmit the received input to a control part of the input interface. The input interface may be provided at a position other than the upper plate 15.

The input interface can be configured to allow a user to input a desired heat intensity or an operation time of the induction heating type cooktop 1. The input interface may be implemented in various forms, such as a mechanical button or a touch panel. The input interface may include, for example, a power button, a lock button, a power control button (e.g., "+", "-", etc.), a timer control button (e.g., "+", "-", etc.), a charging mode button, and other suitable buttons. The input interface may transmit an input provided by a user to a control part of the input interface, and the control part of the input interface may transmit the input to the aforementioned control unit of the induction heating type cooktop 1. The aforementioned control unit may control operations of various devices (e.g., a working coil) based on the input (e.g., a user input) provided from the control part of the input interface. In some implementations, the control part may include a controller, a processor, or an electric circuit.

The upper plate 15 may display a status of the working coils WC1 and WC2 and intensities of heating corresponding to thermal power. For example, an indicator providing a fire hole shape may be displayed in the upper plate 15, the indicator including a plurality of light emitting devices (e.g., light emitting diodes (LEDs)) disposed in the case 25.

The working coils WC1 and WC2 may be installed inside the case 25 to heat a target heating object. For example, the aforementioned control unit can be configured to driver the working coils WC1 and WC2. By way of further example, when the target heating object is positioned on the upper plate 15, the working coils WC1 and WC2 may be driven by the control unit.

In some implementations, the working coils WC1 and WC2 may directly heat a magnetic target heating object (e.g., a magnetic object) or indirectly heat a nonmagnetic target heating object (e.g., a nonmagnetic object) through the thin films TL1 and TL2.

The working coils WC1 and WC2 may heat a target heating object by employing an induction heating method. The working coils WC1 and WC2 may be disposed to overlap the thin films TL1 and TL2 in a longitudinal direction. For example, the working coils WC1 and WC2 can be disposed to overlap the thin films TL1 and TL2, respectively, in a vertical direction or an up-down direction.

While FIG. 1 illustrates that two working coils WC1 and WC2 are installed in the case 25, the present disclosure is not limited to the illustrated implementation. For example, one working coil or three or more working coils may be installed in the case 25.

The thin films TL1 and TL2 may be disposed (e.g., coated) on the upper plate 15 to heat a nonmagnetic object among target heating objects. For example, the thin films TL1 and TL2 may be disposed on a top surface or a bottom surface of the upper plate 15 and may be provided to overlap the working coils WC1 and WC2 in the longitudinal direction. The disposition of the thin films TL1 and TL2 may enable the induction heating type cooktop 1 to heat the corresponding target heating object regardless of a position and a type of the target heating object.

In some implementations, the thin films TL1 and TL2 may have at least one of a magnetic property or a nonmagnetic property. For example, the thin films TL1 and TL2 may have either or both of the magnetic property and the nonmagnetic property.

In some implementations, the thin films TL1 and TL2 may be, for example, composed of a conductive material. As shown in FIG. 1, the thin films TL1 and TL2 may be disposed on a top surface of the upper plate 15 in a pattern such that a plurality of rings having different diameters is repeated (e.g., coaxially disposed). However, other configurations of the thin films are possible in other implementations. For example, the thin films TL1 and TL2 may include a material other than a conductive material and may be disposed on the upper plate 15 by taking a different form. Hereinafter, for the convenience of explanation, the thin films TL1 and TL2 are described as being made of a conductive material and disposed on the upper plate 15 in the form of a plurality of rings having different diameters.

In FIG. 1, two thin films TL1 and TL2 are presented, but the number of thin films included in the cooktop 1 is not limited thereto. For example, one thin film or three or more thin films may be coated. Further, the elements and dispositional relationship between the elements shown in FIG. 1 are for illustrative purposes, and therefore, the shapes, numbers, and positions of the elements should not be construed as being limited to the example shown in FIG. 1.

The specific features of the thin films TL1 and TL2 will be described in more detail herein.

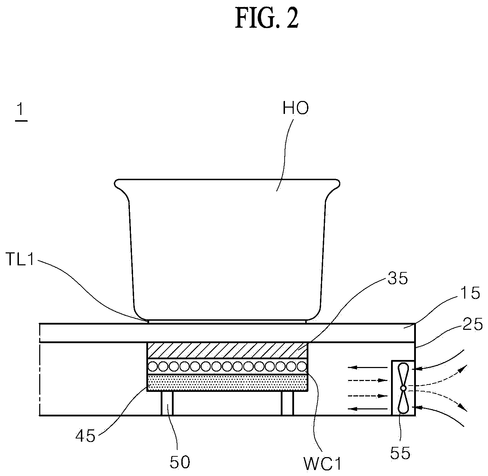

FIG. 2 is a diagram illustrating exemplary elements provided inside the case 25 of the induction heating type cooktop 1 shown in FIG. 1. Referring to FIG. 2, the induction heating type cooktop 1 may further include an insulator 35, a shield plate 45, a support member 50, and a cooling fan 55.

In some implementations, elements (depicted in FIG. 2) disposed in the surroundings of the first working coil WC1 of FIG. 2 are identical to elements disposed in the surroundings of the second working coil WC2 of FIG. 1. For the convenience of explanation, the elements (e.g., the first thin film TL1, the insulator 35, the shield plate 45, the support member 50, and the cooling fan 55) in the surroundings of the first working coil WC1 will be described.

The insulator 35 may be provided between a bottom surface of the upper plate 15 and the first working coil WC1. For example, the insulator 35 may be mounted to a cover plate (e.g., the cover plate 20 of FIG. 1) or the bottom of the upper plate 15. The first working coil WC1 may be disposed below the insulator 35.

The insulator 35 may block heat that is generated when the first thin film TL1 or a target heating object HO is heated upon driving of the first working coil WC1. The insulator 35 may prevent the generated heat from being transferred to the first working coil WC1. For example, when the first thin film TL1 or the target heating object HO is heated by electromagnetic induction of the first working coil WC1, the heat of the first thin film TL1 or the target heating object HO may be transferred to the upper plate 15 and the transferred heat may be further transferred to the first working coil WC1 to thereby causing a damage to the first working coil WC1. The insulator 35 may prevent the damage of the first working coil WC1 by blocking the heat from being transferred to the first working coil WC1 and further prevent a degradation of heating performance of the first working coil WC1.

In some implementations, a spacer may be installed between the first working coil WC1 and the insulator 35. For example, the spacer may be inserted between the first working coil WC1 and the insulator 35, so that the first working coil WC1 and the insulator 35 do not directly contact each other. The spacer may block heat that is generated when the first thin film TL1 and the target heating object HO are heated upon a driving of the first working coil WC1. The spacer may block the generated heat such that the generated heat is prevented from being transferred to the first working coil WC1 through the insulator 35.

The spacer may perform the same or similar function as the insulator 35, thus the spacer may allow using the insulator 35 having a smaller thickness and reducing a gap between the target heating object HO and the first working coil WC1. In some implementations, a plurality of spacers may be provided, and the plurality of spacers may be disposed to be spaced apart from each other in the gap between the first working coil WC1 and the insulator 35. The spacers may guide air suctioned into the case 25 by the cooling fan 55 to the first working coil WC1. For example, the spacers may guide air, introduced into the case 25 by the cooling fan 55, to be properly transferred to the first working coil WC1, thereby improving cooling efficiency of the first working coil WC1.

The shield plate 45 may be mounted to a bottom of the first working coil WC1 to block a magnetic field from the first working coil WC1. For example, the shield plate 45 may block the magnetic field from the first working coil WC1 and the support member may support the shield plate 45.

The support member 50 may be installed between a bottom surface of the shield plate 45 and a bottom surface of the case 25 to support the shield plate 45. For example, by supporting the shield plate 45, the support member 50 may indirectly support the insulator 35 and the first working coil WC1. The support provided by the support member 50 may enable the insulator 35 to be brought into tight contact with the upper plate 15 and to maintain a constant gap between the first working coil WC1 and the target heating object HO.

The support member 50 may include, for example, an elastic object (e.g., a spring) to support the shield plate 45, but aspects of the present disclosure are not limited thereto. In some implementations, the support member 50 may be removed from the induction heating type cooktop 1.

The cooling fan 55 may be installed inside the case 25 to cool the first working coil WC1. For example, the aforementioned control unit may drive the cooling fan 55 and the cooling fan 55 may be installed at a side wall of the case 25. In some implementations, the cooling fan 55 may be installed at a position other than the side wall of the case 25.

The cooling fan 55 may perform a suction of ambient air from the outside of the case 25, as shown in FIG. 2, and transfer the suctioned air to the first working coil WC1. In some implementations, the cooling fan 55 may draw interior air (e.g., heated air) of the case 25 and discharge the air to the outside of the case 25. Accordingly, the cooling fan 55 may enable the induction heating type cooktop 1 to cool internal elements (e.g., first working coil WC1) of the case 25 efficiently.

In some implementations, the ambient air transferred from the outside of the case 25 to the first working coil WC1 by the cooling fan 55 may be further guided to the first working coil WC1 by the spacer. The guided air may enable the induction heating type cooktop 1 to directly and efficiently cool the first working coil WC1, thereby improving a durability of the first working coil WC1. For example, the durability of the induction heating type cooktop 1 may be improved by preventing a thermal damage.

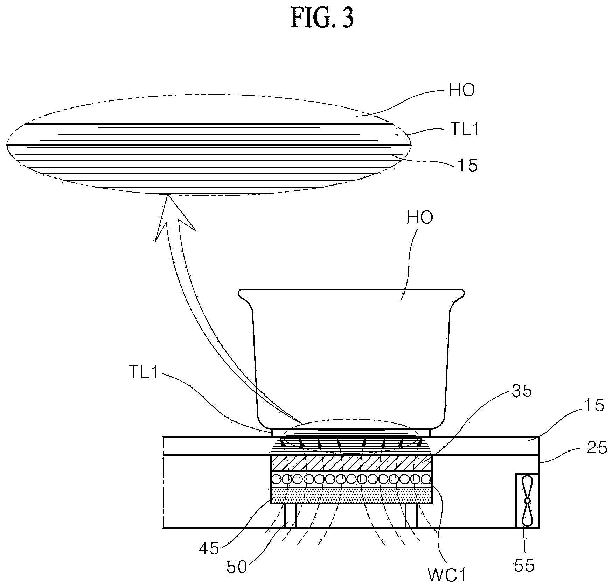

In some implementations, the induction heating type cooktop 1 may include one or more of the above-described features and configurations. Hereinafter, exemplary features and configurations of the aforementioned thin film will be described in more detail with reference to FIGS. 3 to 6.

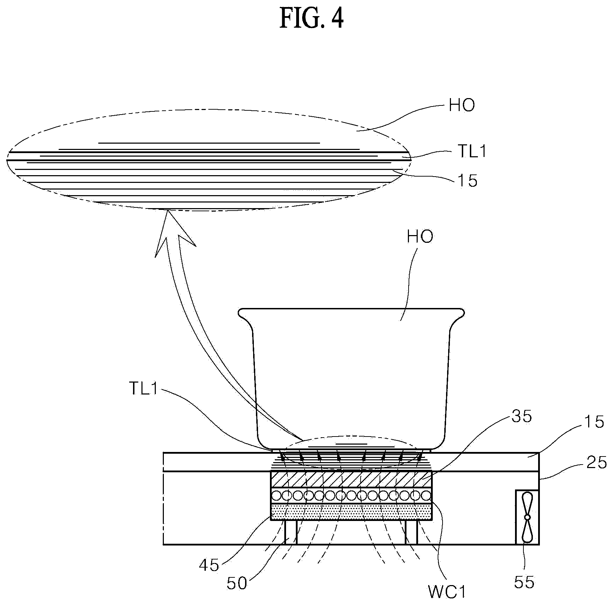

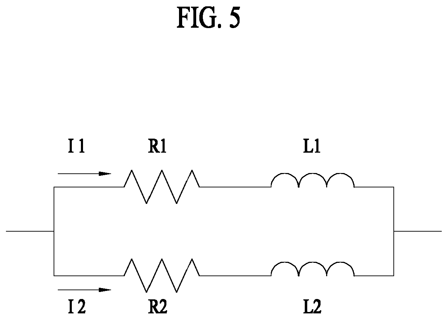

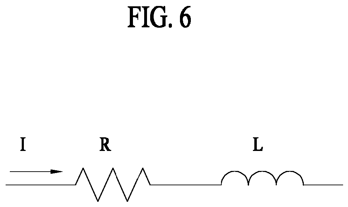

FIGS. 3 and 4 are diagrams illustrating a relation between a thickness and a skin depth of a thin film. FIGS. 5 and 6 are diagrams illustrating a variation of impedance between a thin film and a target heating object depending on a type of the target heating object.

The first thin film TL1 and the second thin film TL2 may have similar technical features, and the thin film TL1 and TL2 may be disposed on the top surface or the bottom surface of the upper plate 15. Hereinafter, for the convenience of explanation, the first thin film TL1 disposed on the top surface of the upper plate 15 will be described as an example.

In some implementations, the first thin film TL1 may include a material having a relatively low permeability. For example, since the first thin film TL1 has a relatively low permeability, the skin depth of the first thin film TL1 may be deep. The skin depth may refer to a depth by which a current can penetrate a material surface, and the relative permeability may be disproportional to the skin depth. Accordingly, the skin depth of the first thin film TL1 may be deeper as the relative permeability of the first thin film **TL1** gets lower.

In some implementations, the skin depth of the first thin film TL1 may have a value greater than a value corresponding to a thickness of the first thin film TL1. That is, since the first thin film TL1 has a thin thickness (e.g., a thickness of 0.1µm~1,000µm) and a skin depth of the first thin film TL1 is greater than the thickness of the first thin film TL1, a magnetic field from the first working coil WC1 may pass through the first thin film TL1 and then transfer to the target heating object HO. The transferred magnetic field may induce eddy current to the target heating object HO.

For example, as illustrated in FIG. 3, when the skin depth of the first thin film TL1 is narrower than the thickness of the first thin film TL1, the magnetic field generated by the first working coil WC1 may have difficulties reaching the target heating object HO.

In some implementations, as illustrated in FIG. 4, when the skin depth of the first skin depth TL1 is deeper than the thickness of the first thin film TL1, most of the magnetic field generated by the first working coil WC1 may be transferred to the target heating object HO. Because the skin depth of the first thin film TL1 is deeper than the thickness of the first thin film TL1, the magnetic field generated by the first working coil WC1 may pass through the first thin film TL1 and most of the magnetic field energy may be dissipated in the target heating object HO. Accordingly, the target heating object HO may be heated primarily.

The thin film TL1 may have a resistance value that allows the first thin film TL1 to be heated by the first working coil WC1. For example, the thickness of the first thin film TL1 may be disproportional to the resistance value of the first thin film TL1 (e.g., a sheet resistance value). By way of further example, the resistance value of the first thin film TL1 increases as the first thin film TL1 gets narrower. A property of the first thin film TL1 may change, based on its shallow disposition on the upper plate 15, to a load resistance capable of heating an object place on the upper plate 15. In some implementations, the first thin film TL1 may have a thickness of, for example, 0.1µm to 1,000µm, but not limited thereto.

In some implementations, the first thin film TL1 can be configured to heat a nonmagnetic object. In some implementations, an impedance property between the first thin film TL1 and the target heating object HO may vary according to whether the target heating object HO is a magnetic object or a nonmagnetic object.

One or more examples, where the target heating object is a magnetic object, will be described in the following.

Referring to FIGS. 2 and 5, when the first working coil WC1 is driven while a magnetic target heating object HO is positioned on the top of the upper plate 15, a resistance component R1 (in FIG. 5) and an inductor component L1 (in FIG. 5) of the magnetic target heating object HO may form an equivalent circuit to that of a resistance component R2 and an inductor component L2 of the first thin film TL1.

In the equivalent circuit, an impedance (an impedance of R1 and L1) of the magnetic target heating object HO may be less than an impedance (an impedance of R2 and L2) of the first thin film TL1. Accordingly, when the aforementioned equivalent circuit is formed, a magnitude of eddy current I1 applied to the magnetic target heating object HO may be greater than a magnitude of eddy current I2 applied to the first thin film TL1. More specifically, most of eddy current may be applied to the target heating object HO, thereby heating the target heating object HO. For example, when the target heating object HO is a magnetic object, the aforementioned equivalent circuit may be formed and most of eddy current may be applied to the target heating object HO. Accordingly, the first working coil WC1 may directly heat the target heating object HO.

In some implementations, some of eddy current may be applied to the first thin film TL1, causing the first thin film TL1 to be heated slightly. Accordingly, the heated first think film TL1 may secondarily heat the target heating object HO to a certain degree. However, a degree to which the target heating object HO is heated by the first thin film TL1 may not be significant when it is compared to a degree heated by the first working coil WC1.

One or more examples, where a target heating object is a nonmagnetic object, will be described in the following.

Referring to FIGS. 2 and 6, when the working coil WC1 is driven while a nonmagnetic target heating object HO is positioned on the top of the upper plate 15, an impedance may not exist in the nonmagnetic target heating object HO but may exist in the first thin film TL1 (e.g., the impedance depicted in FIG. 6). That is, a resistance component R and an inductor component L may exist only in the first thin film TL1. Accordingly, eddy current I (in FIG. 6) may be applied only to the first thin film TL1 and may not be applied to the nonmagnetic target heating object HO. More specifically, the eddy current I may be applied only to the first thin film TL1, thereby heating the first thin film TL1. For example, when the target heating object HO is a nonmagnetic object, the eddy current I may be applied to the first thin film TL1, thereby heating the first thin film TL1. Accordingly, the working coil WC1 may heat the first thin film TL1 which may subsequently heat the nonmagnetic target heating object HO.

As described above, regardless of whether the target heating object HO is a magnetic object or a nonmagnetic object, the target heating object HO may be heated directly or indirectly by a single heating source which is the first working coil WC1. That is, when the target heating object HO is a magnetic object, the first working coil WC1 may primarily heat the target heating object HO, and, when the target heating object HO is a nonmagnetic object, the first thin film TL1 heated by the first working coil WC1 may heat the target heating object HO.

As described above, the induction heating type cooktop 1 may be capable of heating both a magnetic object and a nonmagnetic object. Thus, the induction heating type cooktop 1 may be capable of heating a target heating object regardless of a position and a type of the target heating object. Accordingly, without determining whether the target heating object is a magnetic object or a nonmagnetic object, a user is allowed to place the target heating object in any heating region on the top plate (e.g., upper plate 15), and therefore, a convenience of using the induction heating type cooktop 1 may improve.

In addition, the induction heating type cooktop 1 may directly or indirectly heat a target heating object using the single heating source (e.g., the first working coil WC1 or the second working coil WC2), and therefore, a heat plate or a radiant heater may not be required. Accordingly, using the single heating source may increase a heating efficiency and cut down a material cost.

Hereinafter, another exemplary induction heating type cooktop will be described.

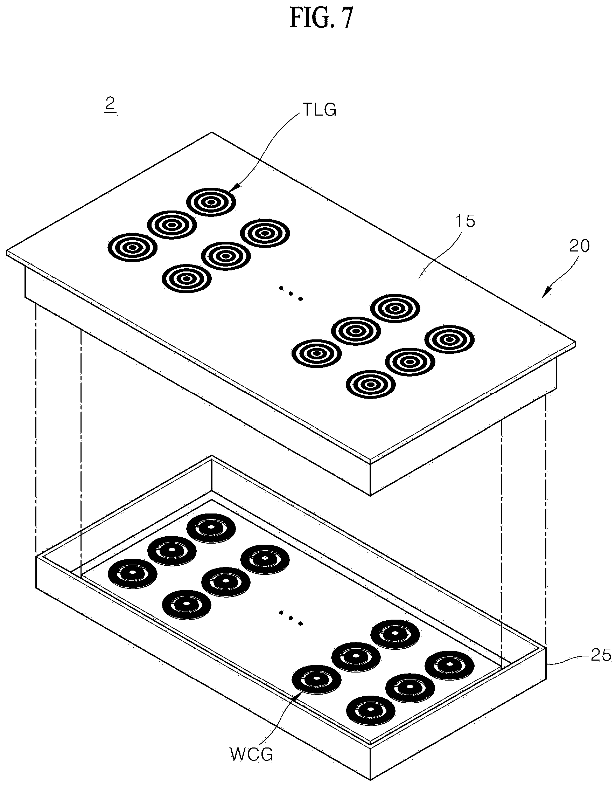

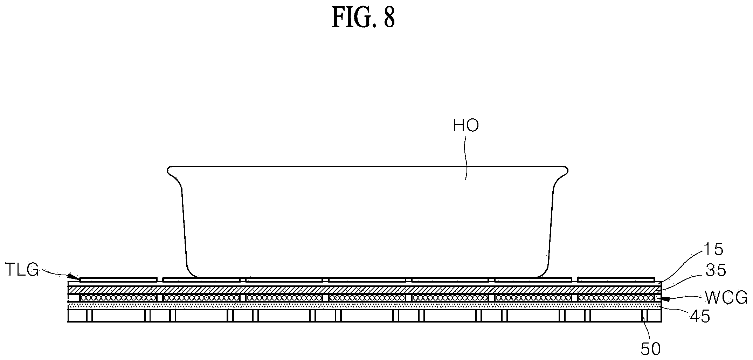

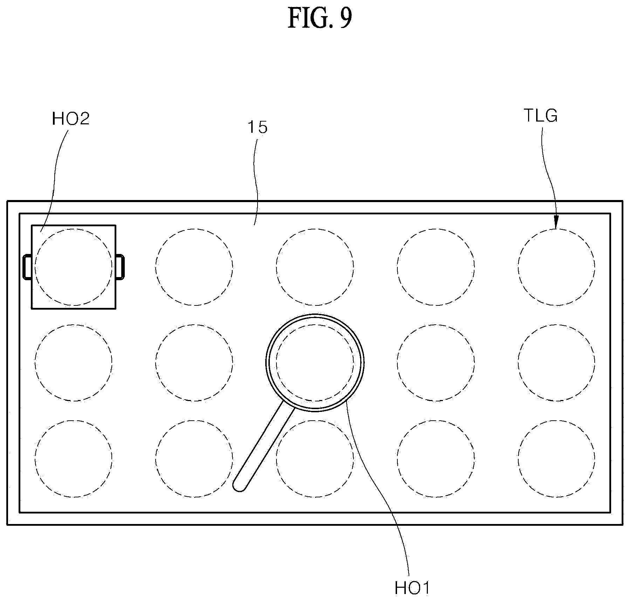

FIG. 7 is a diagram illustrating another exemplary induction heating type cooktop 2. FIG. 8 is a diagram illustrating exemplary elements provided inside the induction heating type cooktop 2 of FIG. 7. FIG. 9 is a diagram illustrating an exemplary target heating object provided on the induction heating type cooktop 2 of FIG. 7.

The induction heating type cooktop 2 may be identical to the induction heating type cooktop 1 of FIG. 1, except for some elements and features. Hence, differences from the induction heating type cooktop 1 will be focused and described below.

Referring to FIGS. 7 and 8, the induction heating type cooktop 2 may be a zone-free cooktop. In some implementations, the induction heating type cooktop 2 may include a case 25, a cover plate 20, a plurality of thin films TLGs, an insulator 35, a plurality of working coils WCGs, a shield plate 45, a support member 50, a cooling fan, a spacer, and a control unit.

The plurality of thin films TLGs and the plurality of WCGs may overlap in a traverse direction and may be disposed to correspond to each other in a one-to-one relationship. The plurality of thin films TLGs and the plurality of thin films WCGs may be in a many-to-many relationship rather than the one-to-one relationship. In some implementations, for example, the plurality of thin films TLGs and the plurality of working coils WCGs may be arranged in a one-to-one relationship. For example, the induction heating type cooktop 2 may be a zone-free cooktop including the plurality of thin films TLGs and the plurality of working coils WCGs, and therefore, the induction heating type cooktop 2 may heat a single target heating object HO by using some or all of the plurality of working coils WCGs at the same time or by using some or all of the plurality of thin films TLGs at the same time. In some implementations, the induction heating type cooktop 2 may heat the target heating object HO by using some or all of the plurality of working coils WCG and also by using some or all of the plurality of thin films TLGs.

Accordingly, as shown in FIG. 9, the induction heating type cooktop 2 may include the plurality of working coils WCG (see FIG. 8) and the plurality of thin films TLG (e.g., a region of the upper plate 15), and the induction heating type cooktop 2 may heat target heating objects HO1 and HO2, regardless of sizes, positions, and types of the target heating objects HO1 and HO2.

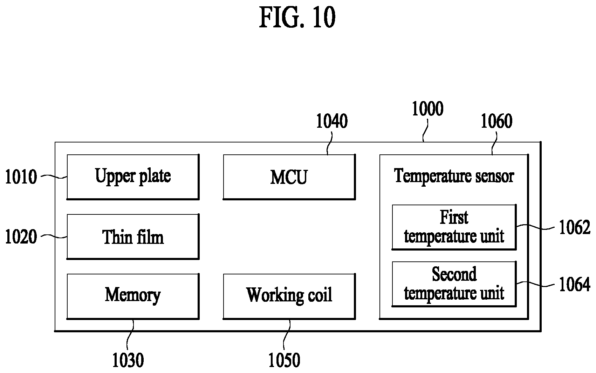

FIG. 10 is an exemplary block diagram illustrating an exemplary cooktop 1000 measuring temperatures of a thin film 1020 and an upper plate 1010 to control an output. The cooktop 1000 may include the upper plate 1010 coupled to a top of a case 25, the upper plate 1010 on which a target heating object is placed, a working coil 1050 provided in the case 25 to heat the target heating object, the thin film 1020 disposed on at least one of a top or a bottom of the upper plate 1010, a temperature sensor 1060 that measures a temperature of at least one of the thin film 1020 or the upper plate 1010, and a microcontroller unit (MCU) 1040 that operates the working coil 1050 to heat the target heating object at a target output set by a user and control an output of the working coil 1050 based on a temperature of the thin film 1020 and a temperature of the upper plate 1010. For example, the MCU 1040 may be a small computer on a single metal-oxide semiconductor (MOS) integrated circuit (IC) chip including one or more CPUs (processor cores) along with memory and programmable input/output peripherals. The temperature sensor 1060 may include a first temperature unit 1062 configured to measure a temperature of a thin film TL and a second temperature unit 1064 configured to measure a temperature of the upper plate 1010.

Based on a temperature of at least one of the thin film 1020 or the upper plate 1010 acquired from the temperature sensor 1060, the MCU 1040 may determine whether the temperature of at least one of the thin film 1020 or the upper plate 1010 satisfies at least one predetermined condition. Based on whether the predetermined condition is satisfied, the MCU 1040 may control the working coil 1050 to increase or reduce an output of the working coil 1050 or block the output.

Hereinafter, a method of arranging components in the cooktop 1000 and a method in which the cooktop 1000 controls an output based on a temperature of at least one of the thin film 1020 or the upper plate 1010 will be described through various implementations.

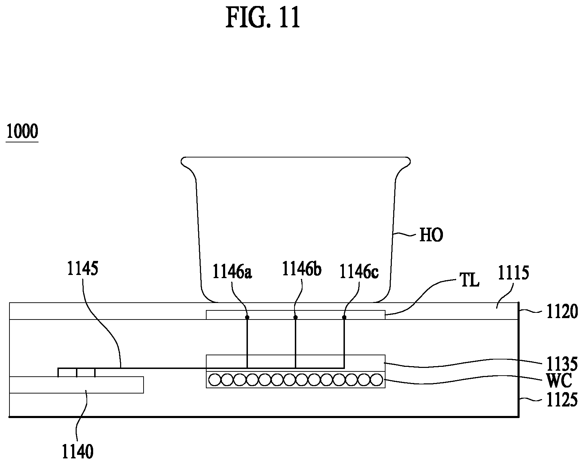

FIG. 11 illustrates a first exemplary implementation of the cooktop 1000 of FIG. 10 including a temperature sensor configured to measure a temperature of a heated portion.

The cooktop 1000 of FIG. 11 may include various components shown in FIG. 10. Also, the cooktop 1000 of FIG. 11 and other following drawings may correspond to the induction heating type cooktop 1 used in various implementations described with respect to FIGS. 1 through 9. Hence, components of the induction heating type cooktop 1000 not shown in FIG. 11 and other following drawings may be understood as selectively including components of the cooktop 1 within the scope supported by FIGS. 1 through 9 and the description thereof.

Referring to FIG. 11, the induction heating type cooktop 1000 may include a cover plate 1120 including an upper plate 1115 coupled to a top of a case 1125, the upper plate 1115 on which the target heating object HO is placed, a working coil WC provided in the case 1125 to heat a target heating object HO, a thin film TL disposed on at least one of a top or a bottom of the upper plate 1115, an insulation 1135 disposed between a bottom surface of the upper plate 1115 and the working coil WC, and a first temperature sensor 1145 that measures a temperature of the thin film TL using a thermocouple.

The first temperature sensor 1145 may include a first temperature unit (e.g., the first temperature unit 1062 in FIG. 10) that measures a temperature of the thin film TL and a second temperature unit (e.g., a second temperature unit 1064 in FIG. 10) that measures a temperature of the upper plate 1115. The first temperature unit may use a thermocouple to measure a temperature of the thin film TL. The second temperature unit may use a thermocouple to measure a temperature of the upper plate 1115.

A thermocouple included in the first temperature sensor 1145 may include a first end portion connected to or in contact with a temperature measured portion and a second end portion configured to transmit measured information toward a controller (e.g., the control unit described above with respect to FIG. 1). The first temperature sensor 1145 may include a portion of thermocouples in various types. For example, a thermocouple used in the first temperature sensor 1145 may be a K-type thermocouple. The first temperature sensor 1145 may measure an electromotive force (e.g., Seebeck voltage caused due to a temperature difference between heterogeneous metals) generated in response to a temperature measurement.

A temperature and an electromotive force measured using the thermocouple may be in a mutually corresponding relationship. Data about the relationship between the temperature and the electromotive force may be stored in advance. The cooktop 1000 may calculate the temperature based on the electromotive force measured using the thermocouple. Through the first temperature sensor 1145, the cooktop 1000 may measure a relatively high temperature compared to a conventional temperature sensor. For example, the cooktop 1000 may use the first temperature sensor 1145 to determine whether a temperature increases within at least 600 degrees Celsius (°C). By way of further example, the cooktop 1000 may measure at least a manufacturer's guaranteed temperature (e.g., 550 °C) of the upper plate 1115 using the first temperature sensor 1145.

The second temperature unit may measure a temperature of the upper plate 1115 using various temperature sensors (e.g., a thermistor). However, since the first temperature sensor 1145 measures a temperature of the thin film TL inductively heated at a high temperature, a conventional temperature sensor that measures relatively low temperature may not be applied.

A thermocouple of the first temperature sensor 1145 may be disposed to measure a temperature of a portion in which at least a predetermined temperature is distributed among temperature distribution by the inductively heated the thin film TL, thereby measuring at least one of the thin film TL or the upper plate 1115. A first end portion (e.g., 1146a, 1146b, 1146c) of each thermocouple may be located in at least one of the thin film TL or the upper plate 1115 to measure a corresponding heating temperature caused by the inductively heated thin film TL. While FIGS. 11 to 16 depict multiple first end portions of the thermocouple for measuring the temperature of the thin film TL, other configurations may be used. For example, a single first end portion may be provided if a number of positions for measuring the temperature of the thin film TL is one. As such, the number of first end portions of the thermocouple may correspond to the number of positions for measuring the temperature of the thin film TL.

The first end portions 1146a, 1146b, and 1146c may be disposed between the upper plate 1115 and the thin film TL, the thin film TL disposed at a bottom of the upper plate 1115.

The first temperature sensor 1145 may be disposed to measure the temperature of the thin film TL at a position in which the thin film TL overlaps the upper plate 1115. For example, the first end portions 1146a, 1146b, and 1146c of a plurality of thermocouples may be disposed to be in contact with the thin film TL.

The cooktop 1000 may further include a fuse to block an output of the working coil WC (e.g., the working coil 1050 in FIG. 10) when a temperature measured from a second temperature sensor increases to exceed a predetermined temperature. The second temperature sensor and the fuse may be in close contact with an upper plate included in the cover plate 1120. The second temperature sensor may measure a temperature of the upper plate. The fuse may be shorted in response to the temperature exceeding a threshold such that the output of the working coil WC is blocked.

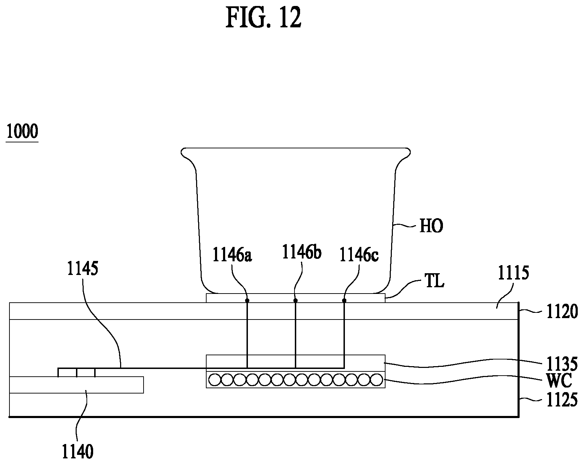

FIG. 12 illustrates a second exemplary implementation of the cooktop 1000 of FIG. 10 including the first temperature sensor 1145 configured to measure a temperature of a portion heated.

The thin film TL of the cooktop 1000 of FIG. 12 may be disposed on a top of the upper plate 1115. Accordingly, the inductively heated thin film TL may be in direct contact with the target heating object HO.

In response to the thin film TL being disposed on the top of the upper plate 1115, the first end portions 1146a, 1146b, and 1146c of the plurality of thermocouples may be in contact with the thin film TL. To allow the first end portions 1146a, 1146b, and 1146c to contact the thin film TL, the thermocouples may penetrate the upper plate 1115. The first end portions 1146a, 1146b, and 1146c may be arranged to contact the thin film TL and the upper plate 1115. For example, the first end portions 1146a, 1146b, and 1146c may be disposed between the thin film TL and the upper plate 1115. In some cases, the first end portions 1146a, 1146b, and 1146c may be in contact with a portion of the upper plate 1115 overlapping the thin film TL to measure an electromotive force corresponding to a heating temperature associated with the thin film TL.

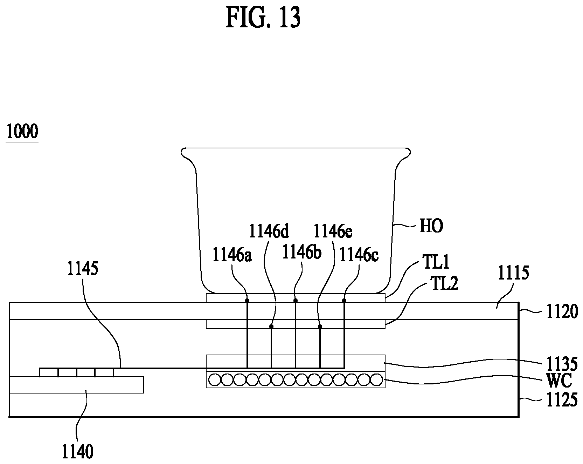

FIG. 13 illustrates a third exemplary implementation of the cooktop 1000 of FIG. 10 including the first temperature sensor 1145 configured to measure temperatures of the thin films TL1 and TL2.

Referring to FIG. 13, thin films TL1 and TL2 of the cooktop 1000 may be disposed on the top and the bottom of the upper plate 1115, respectively. First end portions 1146a, 1146b, 1146c, 1146d, and 1146e of thermocouples included in the first temperature sensor 1145 measuring temperatures of the thin films TL1 and TL2 may be disposed at different positions to not overlap with each other. In some implementations, some of the first end portions 1146a, 1146b, 1146c, 1146d, and 1146e of the thermocouples of the first temperature sensor 1145 may be disposed at positions overlapping each other.

In some implementations, a portion of the first end portions 1146a, 1146b, 1146c, 1146d, and 1146e may be in contact with the upper plate 1115 to measure temperatures of heating by the thin films TL1 and TL2. In some implementations, a portion of the first end portions 1146a, 1146b, 1146c, 1146d, and 1146e may be in contact with the thin films TL1 and TL2 to measure temperatures of the inductively heated thin films TL1 and TL2. In some implementations, a portion of the first end portions 1146a, 1146b, 1146c, 1146d, and 1146e may be disposed between the upper plate 1115 and the thin films TL1 and TL2 to measure a temperature.

A temperature of a target portion for measurement in contact with the first end portions 1146a, 1146b, and 1146c of the thermocouple may generate an electromotive force. The generated electromotive force may be applied to a second end portion. The second end portion may apply the electromotive force to a substrate 1140 and deliver information required for temperature measurement to a controller (e.g., the control unit described above with respect to FIG. 1).

Although FIGS. 11 through 13 illustrate the cooktop 1000 including only the thermocouples included in the first temperature sensor 1145 for measuring a temperature of the thin film TL as an example, in other examples, the cooktop 1000 may also include a second temperature unit (e.g., the second temperature unit 1064 in FIG. 10) for measuring a temperature of the upper plate 1115. For example, the second temperature unit may include a thermocouple and the thermocouple may include a first end portion in contact with the upper plate 1115.

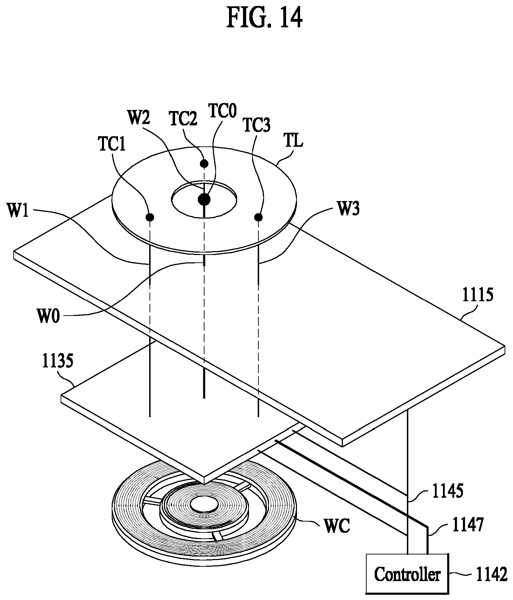

FIG. 14 illustrates a method of arranging a first temperature sensor (e.g., the first temperature sensor 1145 in FIGS. 11-13) and a second temperature sensor 1147 to measure a temperature of at least one of the upper plate 1115 or the thin film TL disposed on the top of the upper plate 1115.

First end portions TC1, TC2, and TC3 of thermocouples included in the first temperature sensor 1145 may be arranged in a manner of contacting the thin film TL. A controller 1142 may measure a temperature based on an electromotive force of the first temperature sensor 1145 generated by the inductively heated thin film TL. Referring to FIG. 14, each thermocouple may penetrate the insulation 1135 such that the first end portions TC1, TC2, and TC3 are in contact with the thin film TL corresponding to a target portion for measurement.

In some implementations, the thermocouples may also penetrate an additional component. For example, the thermocouple may penetrate the upper plate 1115 such that the first end portions TC1, TC2, and TC3 are in contact with the thin film TL corresponding to a target portion for measurement. The first temperature sensor 1145 may include a thermocouple, the first end portions TC1, TC2, and TC3, and wires W1, W2, and W3 connected to the first end portions TC1, TC2, and TC3. Data associated with the electromotive force applied based on temperatures of portions contacting the first end portions TC1, TC2, and TC3 may be delivered through the wires W1, W2, and W3 to the controller 1142.

The second temperature sensor 1147 may be located in a central portion to measure a temperature of the upper plate 1115. The central portion may be in absence of the thin film TL. For example, a portion of the upper plate 1115 measured by the second temperature sensor 1147 may be spaced apart above a predetermined distance from a boundary of overlapping portion between the thin film TL and the upper plate 1115.

Referring to FIG. 14, the second temperature sensor 1147 may penetrate the insulation 1135 to measure a temperature of the upper plate 1115, such that a first end portion TC0 is in contact with the upper plate 1115 corresponding to a target portion for measurement. The second temperature sensor 1147 may include the first end portion TC0 and a wire WO connected to the first end portion TC0. In some implementations, the second temperature sensor 1147 may be a thermistor and the second temperature sensor 1147 may further include an additional circuit (e.g., a resistance distribution circuit for amplifying a voltage distributed to a resistance of the second temperature sensor 1147 and inputting the amplified voltage to an MCU 1040 of the controller 1142) for amplifying a voltage to be transferred to the controller 1142.

In some implementations, the second temperature sensor 1147 may be a thermocouple. The second temperature sensor 1147 including the thermocouple may deliver data associated with an electromotive force applied based on a temperature of a portion contacting the first end portion TC0 through the wire WO to the controller 1142. The thermocouple of the first temperature sensor 1145 or the second temperature sensor 1147 may be disposed to pass through a bottom portion of the insulation 1135 to prevent a damage from the thin film TL heated at a high temperature.

A plurality of thermocouples included in the first temperature sensor 1145 may be arranged to measure a temperature of a portion in which at least a predetermined temperature is distributed among temperature distribution by the inductively heated thin film TL. The thin film TL may be inductively heated by a magnetic field generated in the working coil WC. A heat distribution of the inductively heated thin film TL may be changed in a radial direction. A highest-temperature-heated portion of the inductively heated thin film TL may be determined based on an arrangement relationship with the working coil WC. The first end portions TC1, TC2, and TC3 may be arranged in the temperature-heated portion of the thin film TL. For example, when the thin film TL is inductively heated, a central portion may be heated to the highest temperature based on the radial direction. By way of further example, the first end portions TC1, TC2, and TC3 may be arranged in the central portion of the thin film TL.

In some implementations, the first end portions TC1, TC2, and TC3 may be arranged on the thin film TL at preset intervals.

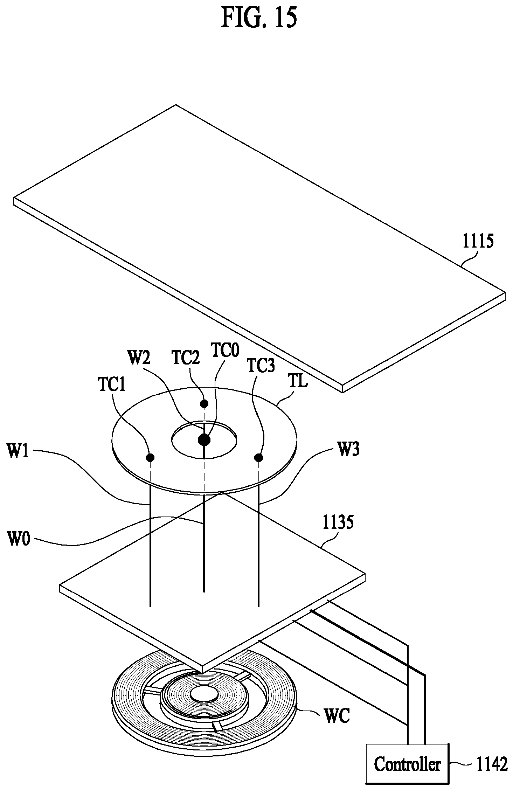

FIG. 15 illustrates another method of arranging a temperature sensor to measure a temperature of heating by the thin film TL disposed at the bottom of the upper plate 1115.

The first end portions TC1, TC2, and TC3 of the plurality of thermocouples included in the first temperature sensor 1145 may be arranged to contact the thin film TL. The controller 1142 may measure a temperature based on an electromotive force generated from the inductively heated thin film TL. Referring to FIG. 15, the plurality of thermocouples may penetrate the insulation 1135 to contact the thin film TL, such that the first end portions TC1, TC2, and TC3 are in contact with the thin film TL corresponding to a target portion for measurement. Data associated with an electromotive force applied based on temperatures of portions contacting the first end portions TC1, TC2, and TC3 may be delivered through the wires W1, W2, and W3 to the controller 1142.

In some implementations, the second temperature sensor 1147 may be a thermistor or a thermocouple. The second temperature sensor 1147 including the thermistor or the thermocouple may be located in a central portion to measure a temperature of the upper plate 1115. The central position may be in absence of the thin film TL. For example, the second temperature sensor 1147 may be disposed to be in contact with a portion in which a temperature of the upper plate 1115 is measured. By way of further example, a portion of the upper plate 1115 measured by the second temperature sensor 1147 may be spaced apart above a predetermined distance from a boundary of overlapping portion between the thin film TL and the upper plate 1115. Since the description of the arrangement and configuration of the second temperature sensor 1147 has been made with reference to FIG. 14, any redundant descriptions will be omitted.

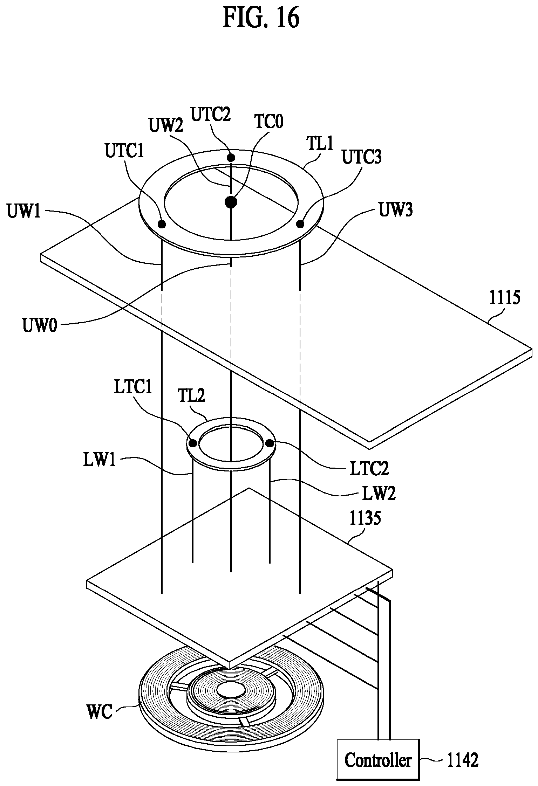

FIG. 16 illustrates a third exemplary method of arranging a temperature sensor to measure a temperature of heating by thin films disposed at a top and a bottom of an upper plate.

Referring to FIG. 16, first end portions UTC1, UTC2, UTC3, LTC1, and LTC2 of a plurality of thermocouples included in the first temperature sensor 1145 for measuring a temperature of the thin film TL may be arranged to contact the thin films TL1 and TL2 disposed at the top and the bottom of the upper plate 1115. The controller 1142 may measure a temperature based on an electromotive force generated from the inductively heated thin films TL1 and TL2. As illustrated in FIG. 16, the plurality of thermocouples may penetrate the insulation 1135 and the upper plate 1115 to contact the thin film TL1, such that the first end portions UTC1, UTC2, and UTC3 are in contact with the thin film TL1 corresponding to a target portion for measurement, and penetrate the insulation 1135 such that the first end portions LTC1 and LTC2 are in contact with the thin film TL2. The plurality of thermocouples may be provided through the wires W1, W2, and W3 connected to the first end portions TC1, TC2, and TC3. Data associated with an electromotive force applied based on temperatures of portions contacting the first end portions TC1, TC2, and TC3 may be delivered through the wires W1, W2, and W3 to the controller 1142.

In some implementations, the thin films TL1 and TL2 disposed at the top and the bottom of the upper plate 1115 may be in different numbers and shapes. For example, the thin films TL1 and TL2 disposed on the top or the bottom of the upper plate 1115 may have ring shapes having different inner radii or outer radii. By way of further example, the thin films TL1 and TL2 disposed on the top or the bottom of the upper plate 1115 may have a disc shape without a hole in the center. In some implementations, the thin films TL1 and TL2 disposed on the top or the bottom of the upper plate 1115 may include a plurality of sub-thin-films. The plurality of sub-thin-films may have different inner radii or outer radii and disposed on the top or the bottom of the upper plate 1115. The plurality of sub-thin-films may be spaced apart from each other to have a gap therebetween. The thin films TL1 and TL2 disposed on the top or the bottom of the upper plate 1115 may be positioned to overlap each other.

Highest-temperature-heated portions of the thin films TL1 and TL2 may be determined based on arrangement relationships with the working coil WC. For example, the first end portions UTC1, UTC2, and UTC3 may be arranged in the highest-temperature-heated portions of the thin film TL1 disposed at the top of the upper plate 1115. Moreover, the first end portions LTC1 and LTC2 may be arranged in the highest-temperature-heated portions of the thin film TL2 disposed at the bottom of the upper plate 1115.

In some implementations, the second temperature sensor 1147 may be a thermistor or a thermocouple. The second temperature sensor 1147 may be located in a central portion that does not include the thin films TL1 and TL2 disposed at the top and the bottom of the upper plate 1115, to measure a temperature of the upper plate 1115. The second temperature sensor 1147 may be disposed to contact a portion in which a temperature of the upper plate 1115 is measured. Since the description of the arrangement and configuration of the second temperature sensor 1147 has been made with respect to FIG. 14, any redundant descriptions will be omitted.

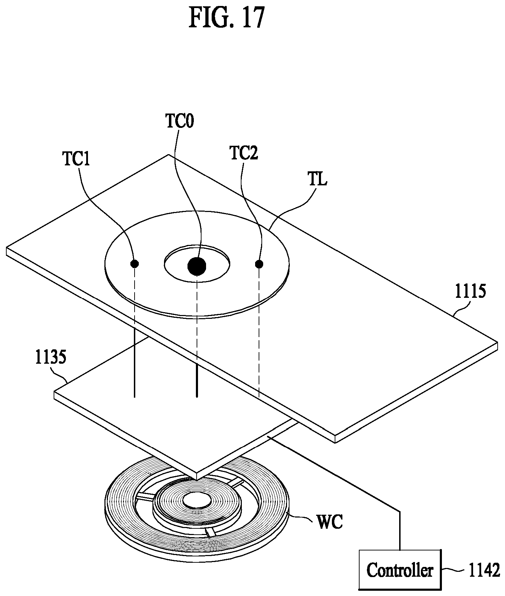

FIG. 17 illustrates an exemplary method of measuring a temperature of heating from the thin film TL by using a thermocouple.

As illustrated in FIGS. 11 through 16, a plurality of thermocouples may be arranged in a portion in which the thin film TL is located, so that first terminals (e.g., the first end portions 1146a, 1146b, and 1146c) are in contact with at least one of the upper plate 1115 or the inductively heated thin film TL.

Referring to FIG. 17, a portion of a plurality of thermocouples included in the first temperature sensor 1145 may be arranged in a position in which the thin film TL is located and another portion of the thermocouples may be arranged in a position in which the thin film TL is not located. For example, among the plurality of thermocouples, the first end portions TC1 and TC2 may be arranged in the position in which the thin film TL is located. By way of further example, the first end portions TC1 and TC2 may be disposed to contact at least one of the upper plate 1115 or the thin film TL and transfer an electromotive force generated from a heating temperature to the controller 1142. Moreover, the first end portion TC0 of the second temperature sensor 1147 may be located in the position in which the thin film TL is not located, to contact the upper plate 1115. In some implementations, the second temperature sensor 1147 may include a thermistor or a thermocouple.

In some implementations, the first end portion TC0 in the position in which the thin film TL is not located may be located in a hole formed in a central portion of the thin film TL. For example, the thin film TL may include a plurality of sub-thin-films arranged to have a gap therebetween. By way of further example, the first end portion TC0 may be located in the gap between the sub-thin-films.

Since the shapes and arrangements of the components of the cooktop 1000 illustrated in FIGS. 11 through 17 are merely examples provided for the ease and convenience of description, the present disclosure is not interpreted as being limited thereto. Instead, it should be understood that a plurality of thermocouples is arranged in at least one of the thin film TL or the upper plate 1115 in various ways.

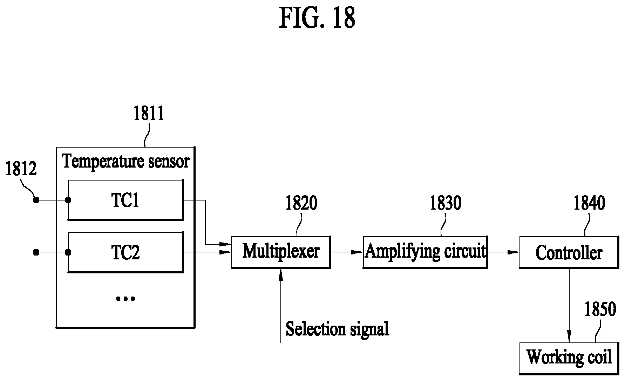

FIG. 18 illustrates a process for controlling a working coil based on a measured temperature by a controller 1840. The measured temperature may be based on information measured from at least one of a plurality of thermocouples included in the first temperature unit or the second temperature unit according to a selection signal.

A temperature sensor 1811 including the first temperature unit and/or the second temperature unit may include a plurality of thermocouples TC1, TC2, and the like. An electromotive force generated from a temperature of a target portion for measurement contacting a first end portion 1812 of the plurality of thermocouples TC1 and TC2 may be transferred to a multiplexer 1820. The electromotive force may be transmitted in a form of data to the multiplexer 1820. For example, the electromotive force may be transmitted directly as an analog signal. The multiplexer 1820 may transfer the electromotive force of one of the plurality of thermocouples TC1 and TC2 to an amplifying circuit 1830 based on a received selection signal. The selection signal may be a signal for selecting one of the electromotive forces acquired from the plurality of thermocouples TC1 and TC2, which is an input signal. The selection signal may allow one of the electromotive forces acquired from the plurality of thermocouples TC1 and TC2 to be selected based on a predetermined period. The selection signal may correspond to a signal (e.g., a signal input by a user) received from an external source.

The amplifying circuit 1830 may be a circuit for amplifying the electromotive force acquired from the multiplexer 1820. For example, the amplifying circuit 1830 may amplify a magnitude of the electromotive force. Even when the electromotive force acquired from the multiplexer 1820 has a small variation in comparison to a change in temperature, the amplifying circuit 1830 may be used to easily measure a temperature based on the variation of the electromotive force.

In some implementations, the amplifying circuit 1830 may be a single circuit irrespective of a number of the thermocouples TC1 and TC2. Since the cooktop 1000 uses the multiplexer 1820 to select one of the electromotive forces of the plurality of thermocouples TC1 and TC2, a temperature measurement may be available by using the single the amplifying circuit 1830. As such, since the single amplifying circuit 1830 is used, a complexity and a space of the circuit may be reduced even when the temperature measurement is performed at a plurality of positions. In some implementations, a plurality of the amplifying circuit 1830 may be provided. In this disclosure, it is understood that a configuration of the amplifying circuit 1830 includes various circuits capable of amplifying an input electromotive force and outputting the amplified electromotive force.

The controller 1840 having acquired a signal of the electromotive force output through the amplifying circuit 1830 may measure a temperature based on the electromotive force. By measuring the temperature based on the electromotive force, the controller 1840 may control an output of a working coil 1850 based on the measured temperature. Related description will be discussed later.

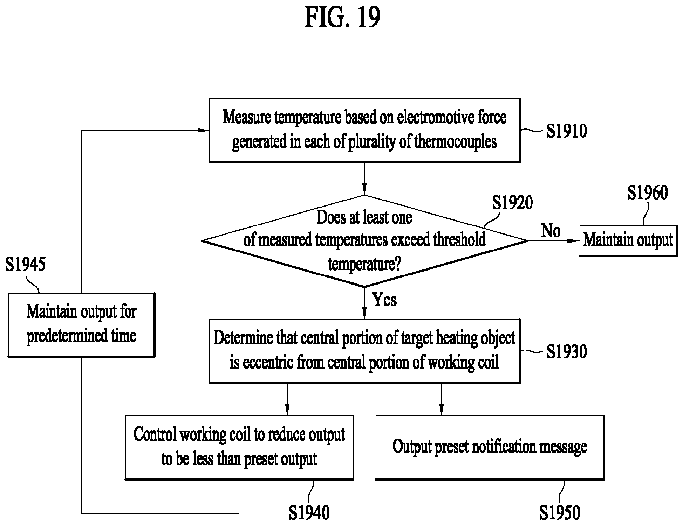

FIG. 19 is a flowchart illustrating an exemplary method of controlling an output based on whether a temperature measured by each of a plurality of thermocouples exceeds a threshold temperature.

A control unit implemented (e.g., the MCU 1040 in FIG. 10) in a cooktop (e.g., the cooktop 1000 in FIG. 10) may measure a temperature based on an electromotive force generated in each of a plurality of thermocouples in operation S1910.

In operation S1920, the control unit may determine whether at least one of the measured temperatures exceeds a threshold temperature. The thin film inductively heated by the working coil may form an equivalent circuit having a resistor component and an inductor component along with a target heating object corresponding to a magnetic substance. When the target heating object is eccentric from a center of the working coil and the thin film, the temperature of the inductively heated thin film TL may significantly increase in a portion in which the target heating object deviates from the thin film TL. Accordingly, temperatures measured from at least a portion of the plurality of thermocouples may exceed a predetermined threshold temperature.

When it is determined that at least one of the measured temperatures does not exceed the threshold temperature, the control unit may maintain a current output in operation S1960. Instead of maintaining the current output, the control unit may control the working coil WC to be operated with an output set by a user.

When it is determined that at least one of the measured temperatures exceeds the threshold temperature, the control unit may determine that a central portion of the target heating object is eccentric from a central portion of the working coil in operation S1930.

When it is determined that the central portion of the target heating object is eccentric from the central portion of the working coil, in operation S1940, the control unit may control the working coil WC to reduce an output to be less than a preset output. When the target heating object is eccentric, a temperature of the thin film TL may be radically increased in a portion in which the target heating object is not located, which may lead to damage an upper plate and other components. To prevent the damage from the eccentricity, the controller may control the working coil WC to reduce the output to be less than the preset output. The preset output may be an output less by a predetermined degree than the output set by the user, or may be a predetermined absolute output.

The control unit may further control an output part to provide predetermined information to a user. The output part may generate a visual, auditory, or tactile output. The output part may include, for example, a display that outputs visual information, a speaker that outputs auditory information, and a haptic module that outputs tactile information.

In some implementations, when it is determined that the central portion of the target heating object is eccentric from the central portion of the working coil, the control unit may control the working coil such that an output is reduced to be less than the preset output and selectively output a preset notification message in operation S1950. The notification message may be provided based on a visual or auditory output. The notification message output in operation S1950 may include information for notifying a user that the target heating object is eccentric or the output is reduced due to the eccentricity.

In some implementations, the control unit is configured to determine whether to maintain an output of the working coil to be the target output or reduce the output based on at least one of conditions including whether the temperature of the thin film measured by the first temperature sensor is higher than or equal to a first threshold temperature and whether the temperature of the upper plate measured by the second temperature sensor is higher than or equal to a second threshold temperature. In some implementations, the first threshold temperature is higher than the second threshold temperature.

In some implementations, the control unit is configured to suspend an operation of the working coil when the temperature of the thin film measured by the first temperature sensor is higher than or equal to a predetermined first threshold temperature or when the temperature of the upper plate measured by the second temperature sensor is higher than or equal to a predetermined second threshold temperature. In some implementations, the control unit is configured to suspend an operation of the working coil or maintain an output of the working coil to be the target output based on whether the temperature of the thin film measured by the first temperature sensor is lower than the temperature of the upper plate measured by the second temperature sensor.

After the working coil WC is controlled to reduce the output to be less than the preset output in operation S1940, the control unit may maintain the reduced output for a predetermined time in operation S1945. When the predetermined time elapses, the control unit may return to operation S1910 and measure a temperature based on the electromotive force generated in each of the plurality of thermocouples. The control unit may verify whether a temperature based on the output maintained for the predetermined time exceeds the threshold temperature in operation S1920.

As such, the control unit may continuously reduce the output until the measured temperature is less than the threshold temperature, thereby preventing a damage to the upper plate 1115 or similar components. Simultaneously, the control unit may output a preset notification message to a user so that the user recognizes that the target heating object is currently in an eccentric state and heated with an output less than an output set by the user. The message may enable the user to correct the eccentric state of the target heating object and manipulate the cooktop to heat the target heating object with a correct output.

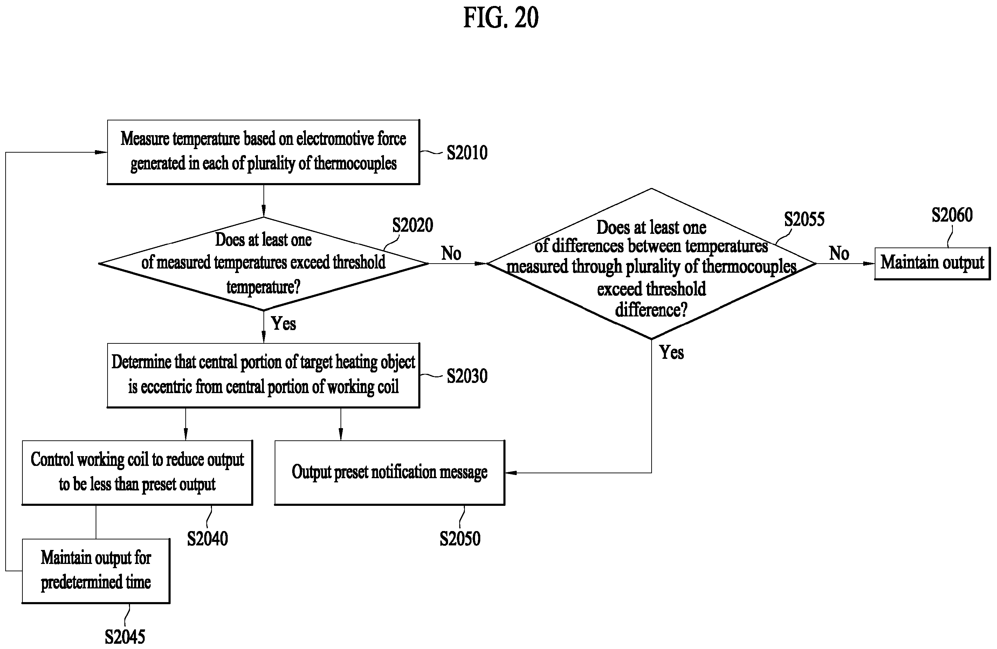

FIG. 20 is a flowchart illustrating an exemplary method of controlling an output based on whether a temperature measured through each of a plurality of thermocouples exceeds a threshold temperature and whether at least one of differences between temperatures measured through the plurality of thermocouples exceeds a threshold difference. Since technical characteristics of operations S2010, S2020, S2030, S2040, and S2045 of FIG. 29 are similar or identical to those of operations S1910, S1920, S1930, S1940, and S1945 of FIG. 19, any redundant descriptions will be omitted.

When it is determined in operation S2020 that at least one of temperatures measured based on electromotive forces generated in a plurality of thermocouples exceeds a threshold temperature, the control unit may determine that a target heating object is eccentric in operation S2030 and control the working coil based on a result of the determination in operation S2040. When an output is continuously reduced based on a result of the controlling, a measured temperature may be reduced to be less than the threshold temperature even though the target heating object is in the eccentric state.

When it is determined in operation S2020 that at least one of temperatures measured based on electromotive forces generated in a plurality of thermocouples does not exceed a threshold temperature, in operation S2055, the control unit may determine whether at least one of differences between the temperatures measured through the plurality of thermocouples exceeds a threshold difference.

When it is determined in operation S2030 that the target heating object HO is eccentric, the control unit may control the working coil WC to reduce an output to be less than the preset output in operation S2040. Because of this, the target heating object may not be heated with an output set by the user in an eccentric state, which may reduce a user's convenience of use. Since the measured temperatures are less than the threshold temperature, it is unlikely that the thin film is partially overheated. But even so, when at least one of the differences between the measured temperatures exceeds the threshold differences, the control unit may control the working coil WC to reduce the output. In some implementations, the control unit may output a preset notification message (e.g., information indicating that the target heating object HO is eccentric) to the user through an output part in operation S2050. Through this, the control unit may control the output of the working coil WC in consideration of both stability and convenience of use.

When a measured temperature is less than the threshold temperature and at least one of the differences between the temperatures measured from the plurality of thermocouples is less than the threshold difference, the control unit may maintain a current output in operation S2060. In some implementations, instead of maintaining the current output, the control unit may control the working coil WC to be operated at the output set by the user.

In some implementations, it is possible to heat a magnetic object and a non-magnetic object on a single-induction cooktop using a thin film to be directly induction heated.

In some implementations, it is possible to quickly and accurately measure a high temperature on a cooktop including a thin film that is inductively heated at a high temperature.

In some implementations, it is possible to prevent an upper plate of a cooktop from being damaged due to a thin film heated at a high temperature.

In some implementations, it is possible to measure temperatures of a thin film and a target heating object separately, thereby appropriately controlling an output based on a state of the target heating object and acquiring whether a temperature reaches an abnormal level.

In some implementations, it is possible to measure a high temperature and control an output to prevent an upper plate from being damaged due to an abnormally high temperature caused by an eccentricity of a target heating object in a cooktop that heats a magnetic object and a non-magnetic object through an induction heating.

In addition to the aforementioned effects, other specific effects have been described above with reference to the foregoing implementations of the present disclosure.

Although implementations have been described with reference to a number of illustrative implementations thereof, it should be understood that numerous other modifications and implementations can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An induction heating type cooktop comprising:
an upper plate (15, 1010, 1115) coupled to a top of a case (25, 1125), the upper plate (15, 1010, 1115) being configured to support a target object;
a thin film (1020) disposed on at least one of a top of the upper plate (15, 1010, 1115) or a bottom of the upper plate (15, 1010, 1115);
a working coil (1050, 1850) provided in the case (25, 1125) and configured to inductively heat at least one of the thin film (1020) and the target object; and
a first temperature sensor (1145) configured to measure a temperature of the thin film (1020);
**characterized in that** the induction heating type cooktop further comprises:
a second temperature sensor (1147) configured to measure a temperature of the upper plate (15, 1010, 1115); and
a controller (1040, 1840) configured to control an output of the working coil (1050, 1850) based on at least one of the measured temperature of the thin film (1020) and the measured temperature of the upper plate (15, 1010, 1115).

2. The induction heating type cooktop of claim 1,
wherein a controller (1040, 1840) configured to control the working coil (1050, 1850) to heat the target object based on a target output,
wherein the first temperature sensor (1145) is configured to measure a temperature of a portion of the thin film (1020) overlapping the upper plate (15, 1010, 1115), and
wherein the second temperature sensor (1147) is configured to measure a temperature of a portion of the upper plate (15, 1010, 1115) not overlapping the thin film (1020).

3. The induction heating type cooktop of claim 2,
wherein the thin film (1020) includes a hole in a central portion, and
wherein the second temperature sensor (1147) is configured to measure the temperature of the upper plate (15, 1010, 1115) through the hole based on the thin film (1020) being disposed on the bottom of the upper plate (15, 1010, 1115).

4. The induction heating type cooktop of any one of claims 1 to 3, wherein the first temperature sensor (1145) is configured to measure temperatures of a plurality of portions of the thin film (1020).

5. The induction heating type cooktop of any one of claims 1 to 4, wherein the controller (1040, 1840) is configured to determine whether to maintain the output of the working coil (1050, 1850) to be the target output or reduce the output based on at least one of the measured temperature of the thin film (1020) or the measured temperature of the upper plate (15, 1010, 1115).

6. The induction heating type cooktop of any one of claims 1 to 5, wherein the controller (1040, 1840) is configured to determine whether to maintain the output of the working coil (1050, 1850) to be the target output or reduce the output based on whether the measured temperature of the thin film (1020) is higher than or equal to a first threshold temperature.

7. The induction heating type cooktop of any one of claims 1 to 6, wherein the controller (1040, 1840) is configured to determine whether to maintain the output of the working coil (1050, 1850) to be the target output or reduce the output based on whether the measured temperature of the upper plate (15, 1010, 1115) is higher than or equal to a second threshold temperature.

8. The induction heating type cooktop of any one of claims 1 to 7, wherein the controller (1040, 1840) is configured to suspend an operation of the working coil (1050, 1850) based on the temperature of the thin film (1020) being higher than or equal to a predetermined first threshold temperature or the temperature of the upper plate (15, 1010, 1115) being higher than or equal to a predetermined second threshold temperature.

9. The induction heating type cooktop of any one of claims 1 to 8, wherein the controller (1040, 1840) is configured to suspend an operation of the working coil (1050, 1850) or maintain the output to be the target output based on whether the measured temperature of the thin film (1020) is lower than the measured temperature of the upper plate (15, 1010, 1115).

10. The induction heating type cooktop of any one of claim 1 to 9, wherein the controller (1040, 1840) is configured to determine a central portion of the target object is eccentric from a central portion of the working coil (1050, 1850) based on whether at least one of the measured temperatures of the thin film (1020) and the measured temperature of the upper plate (15, 1010, 1115) exceeds a threshold temperature.

11. A method of controlling an output of a working coil (1050, 1850) to heat a target object, the method comprising:
inductively heating at least one of a thin film (1020) and the target object by the working coil (1050, 1850), the thin film (1020) being configured to be positioned between the working coil (1050, 1850) and the target object; and
receiving, from a first temperature sensor (1145), a measured temperature of the thin film disposed on at least one of a top of an upper plate (15, 1010, 1115) or a bottom of the upper plate (15, 1010, 1115), the upper plate (15, 1010, 1115) coupled to a top of a case (25, 1125) and configured to support the target object;
**characterized in that** the method further comprises:
receiving, from a second temperature sensor, a measured temperature of the upper plate (15, 1010, 1115), the upper plate (15, 1010, 1115) holding the target object; and
controlling the output of the working coil (1050, 1850) based on at least one of the measured temperature of the thin film (1020) and the measured temperature of the upper plate (15, 1010, 1115).

12. The method of claim 11, further comprising:
determining whether to maintain the output of the working coil (1050, 1850) to be a target output or reduce the output based on (i) whether the measured temperature of the thin film (1020) measured by the first temperature sensor is higher than or equal to a first threshold temperature and (ii) whether the measured temperature of the upper plate (15, 1010, 1115) measured by the second temperature sensor is higher than or equal to a second threshold temperature,
wherein the first threshold temperature is higher than the second threshold temperature.

13. The method of claim 11 or 12, further comprising:
suspending an operation of the working coil (1050, 1850) based on the measured temperature of the thin film (1020) being higher than or equal to a predetermined first threshold temperature or the measured temperature of the upper plate (15, 1010, 1115) being higher than or equal to a predetermined second threshold temperature.

14. The method of any one of claims 11 to 13, further comprising:
suspending an operation of the working coil (1050, 1850) or maintaining the output to be a target output based on whether the measured temperature of the thin film (1020) is lower than the measured temperature of the upper plate (15, 1010, 1115).

15. The method of any one of claims 11 to 14, further comprising:
determining whether a central portion of the target object is eccentric from a central portion of the working coil (1050, 1850) based on whether at least one of the measured temperatures of the thin film (1020) and the measured temperature of the upper plate (15, 1010, 1115) exceeds a threshold temperature.

## Patentansprüche

1. Induktionskochfeld, das aufweist:
eine obere Platte (15, 1010, 1115), die mit einer Oberseite eines Gehäuses (25, 1125) gekoppelt ist, wobei die obere Platte (15, 1010, 1115) konfiguriert ist, ein Sollobjekt zu stützen;
einen Dünnfilm (1020), der auf einer Oberseite der oberen Platte (15, 1010, 1115) und/oder einer Unterseite der oberen Platte (15, 1010, 1115) angeordnet ist;
eine Arbeitsspule (1050, 1850), die in dem Gehäuse (25, 1125) vorgesehen und konfiguriert ist, induktiv den Dünnfilm (1020) und/oder das Sollobjekt zu heizen; und
einen ersten Temperatursensor (1145), der konfiguriert ist, eine Temperatur des Dünnfilms (1020) zu messen;
**dadurch gekennzeichnet, dass** das Induktionskochfeld ferner aufweist:
einen zweiten Temperatursensor (1147), der konfiguriert ist, eine Temperatur der oberen Platte (15, 1010, 1115) zu messen; und
eine Steuerung (1040, 1840), die konfiguriert ist, eine Leistung der Arbeitsspule (1050, 1850) basierend auf der gemessenen Temperatur des Dünnfilms (1020) und/oder der gemessenen Temperatur der oberen Platte (15, 1010, 1115) zu steuern.

2. Induktionskochfeld nach Anspruch 1,
wobei eine Steuerung (1040, 1840) konfiguriert ist, die Arbeitsspule (1050, 1850) zu steuern, um das Sollobjekt basierend auf einer Sollleistung zu erhitzen,
wobei der erste Temperatursensor (1145) konfiguriert ist, eine Temperatur eines Abschnitts des Dünnfilms (1020) zu messen, der die obere Platte (15, 1010, 1115) überlappt, und
wobei der zweite Temperatursensor (1147) konfiguriert ist, eine Temperatur eines Abschnitts der oberen Platte (15, 1010, 1115) zu messen, der die dünne Schicht (1020) nicht überlappt.

3. Induktionskochfeld nach Anspruch 2,
wobei die Dünnfilm (1020) in einem mittleren Abschnitt ein Loch aufweist, und
wobei der zweite Temperatursensor (1147) konfiguriert ist, die Temperatur der oberen Platte (15, 1010, 1115) durch das Loch zu messen, basierend darauf, dass der Dünnfilm (1020) auf dem Boden der oberen Platte (15, 1010, 1115) angeordnet ist.

4. Induktionskochfeld nach einem der Ansprüche 1 bis 3, wobei der erste Temperatursensor (1145) konfiguriert ist, die Temperaturen von mehreren Abschnitten des Dünnfilms (1020) zu messen.

5. Induktionskochfeld nach einem der Ansprüche 1 bis 4, wobei die Steuerung (1040, 1840) konfiguriert ist, basierend auf der gemessenen Temperatur der Dünnschicht (1020) und/oder der gemessenen Temperatur der oberen Platte (15, 1010, 1115) zu bestimmen, ob die Leistung der Arbeitsspule (1050, 1850) auf der Sollleistung gehalten oder die Leistung reduziert werden soll.

6. Induktionsheizungskochfeld nach einem der Ansprüche 1 bis 5, wobei die Steuerung (1040, 1840) konfiguriert ist, basierend darauf, ob die gemessene Temperatur der Dünnschicht (1020) höher als oder gleich einer ersten Schwellentemperatur ist, zu bestimmen, ob die Leistung der Arbeitsspule (1050, 1850) auf der Sollleistung gehalten oder die Leistung reduziert werden soll.

7. Induktionskochfeld nach einem der Ansprüche 1 bis 6, wobei die Steuerung (1040, 1840) konfiguriert ist, basierend darauf, ob die gemessene Temperatur der oberen Platte (15, 1010, 1115) höher als oder gleich einer zweiten Schwellentemperatur ist, zu bestimmen, ob die Leistung der Arbeitsspule (1050, 1850) auf der Sollleistung gehalten oder die Leistung reduziert werden soll.

8. Induktionskochfeld nach einem der Ansprüche 1 bis 7, wobei die Steuerung (1040, 1840) konfiguriert ist, basierend darauf, dass die Temperatur der Dünnschicht (1020) höher als oder gleich einer vorbestimmten ersten Schwellentemperatur ist oder die Temperatur der oberen Platte (15, 1010, 1115) höher als oder gleich einer vorbestimmten zweiten Schwellentemperatur ist, einen Betrieb der Arbeitsspule (1050, 1850) auszusetzen.

9. Induktionskochfeld nach einem der Ansprüche 1 bis 8, wobei die Steuerung (1040, 1840) konfiguriert ist, basierend darauf, ob die gemessene Temperatur der Dünnschicht (1020) niedriger ist als die gemessene Temperatur der oberen Platte (15, 1010, 1115), einen Betrieb der Arbeitsspule (1050, 1850) auszusetzen oder die Leistung auf der Sollleistung zu halten.

10. Induktionskochfeld nach einem der Ansprüche 1 bis 9, wobei die Steuerung (1040, 1840) konfiguriert ist, basierend darauf, ob mindestens eine der gemessenen Temperaturen des Dünnfilms (1020) und der gemessenen Temperatur der oberen Platte (15, 1010, 1115) eine Schwellentemperatur überschreitet, zu bestimmen, dass ein mittlerer Abschnitt des Sollobjekts exzentrisch zu einem mittleren Abschnitt der Arbeitsspule (1050, 1850) ist.

11. Verfahren zur Steuerung der Leistung einer Arbeitsspule (1050, 1850), um ein Sollobjekt zu heizen, wobei das Verfahren aufweist:
induktives Heizen eines Dünnfilms (1020) und/oder des Sollobjekts durch die Arbeitsspule (1050, 1850), wobei der Dünnfilm (1020) konfiguriert ist, zwischen der Arbeitsspule (1050, 1850) und dem Sollobjekt positioniert zu werden; und
Empfangen einer gemessenen Temperatur des Dünnfilms von einem ersten Temperatursensor (1145), wobei der Dünnfilm auf einer Oberseite einer oberen Platte (15, 1010, 1115) und/oder einer Unterseite der oberen Platte (15, 1010, 1115) angeordnet ist, wobei die obere Platte (15, 1010, 1115) mit einer Oberseite eines Gehäuses (25, 1125) gekoppelt und konfiguriert ist das Sollobjekt zu stützen;
**dadurch gekennzeichnet, dass** das Verfahren ferner aufweist:
Empfangen einer gemessenen Temperatur der oberen Platte (15, 1010, 1115) von einem zweiten Temperatursensor, wobei die obere Platte (15, 1010, 1115) das Sollobjekt hält; und
Steuern der Leistung der Arbeitsspule (1050, 1850) basierend auf der gemessenen Temperatur des Dünnfilms (1020) und/oder der gemessenen Temperatur der oberen Platte (15, 1010, 1115).

12. Verfahren nach Anspruch 11, das ferner aufweist:
Bestimmen, ob die Leistung der Arbeitsspule (1050, 1850) auf der Sollleistung gehalten oder die Leistung reduziert werden soll, basierend darauf (i), ob die von dem ersten Temperatursensor gemessene Temperatur des Dünnfilms (1020) höher oder gleich einer ersten Schwellentemperatur ist, und (ii), ob die von dem zweiten Temperatursensor gemessene Temperatur der oberen Platte (15, 1010, 1115) höher oder gleich einer zweiten Schwellentemperatur ist,
wobei die erste Schwellentemperatur höher ist als die zweite Schwellentemperatur.

13. Verfahren nach Anspruch 11 oder 12, das ferner aufweist:
Aussetzen eines Betriebs der Arbeitsspule (1050, 1850) basierend darauf, dass die gemessene Temperatur des Dünnfilms (1020) höher als oder gleich einer vorbestimmten ersten Schwellentemperatur ist oder die gemessene Temperatur der oberen Platte (15, 1010, 1115) höher als oder gleich einer vorbestimmten zweiten Schwellentemperatur ist.

14. Verfahren nach einem der Ansprüche 11 bis 13, das ferner aufweist:
Aussetzen eines Betriebs der Arbeitsspule (1050, 1850) oder Halten der Leistung auf der Sollleistung, basierend darauf, ob die gemessene Temperatur des Dünnfilms (1020) niedriger ist als die gemessene Temperatur der oberen Platte (15, 1010, 1115).

15. Verfahren nach einem der Ansprüche 11 bis 14, das ferner aufweist:
Bestimmen, ob ein mittlerer Abschnitt des Sollobjekts exzentrisch zu einem mittleren Abschnitt der Arbeitsspule (1050, 1850) ist, basierend darauf, ob mindestens eine der gemessenen Temperaturen des Dünnfilms (1020) und der gemessenen Temperatur der oberen Platte (15, 1010, 1115) eine Schwellentemperatur überschreitet.

## Revendications

1. Plaque de cuisson à induction, comprenant :
une plaque supérieure (15, 1010, 1115) raccordée à la partie supérieure d'un caisson (25, 1125), ladite plaque supérieure (15, 1010, 1115) étant prévue pour supporter un objet cible ;
un film mince (1020) disposé sur le dessus de la plaque supérieure (15, 1010, 1115) et/ou sur le dessous de la plaque supérieure (15, 1010, 1115) ;
une bobine de travail (1050, 1850) disposée dans le caisson (25, 1125) et prévue pour chauffer par induction le film mince (1020) et/ou l'objet cible ; et
un premier capteur de température (1145) prévu pour mesurer la température du film mince (1020) ;
**caractérisée en ce que** ladite plaque de cuisson à induction comprend en outre :
un deuxième capteur de température (1147) prévu pour mesurer la température de la plaque supérieure (15, 1010, 1115) ; et
un contrôleur (1040, 1840) prévu pour commander la puissance de sortie de la bobine de travail (1050, 1850) sur la base de la température mesurée du film mince (1020) et/ou de la température mesurée de la plaque supérieure (15, 1010, 1115).

2. Plaque de cuisson à induction selon la revendication 1,
où un contrôleur (1040, 1840) est prévu pour commander la bobine de travail (1050, 1850) afin de chauffer l'objet cible sur la base d'une puissance de sortie cible,
où le premier capteur de température (1145) est prévu pour mesurer la température d'une partie du film mince (1020) recouvrant la plaque supérieure (15, 1010, 1115), et
où le deuxième capteur de température (1147) est prévu pour mesurer la température d'une partie de la plaque supérieure (15, 1010, 1115) ne recouvrant pas le film mince (1020).

3. Plaque de cuisson à induction selon la revendication 2,
où le film mince (1020) comporte un trou ménagé dans une partie centrale, et
où le deuxième capteur de température (1147) est prévu pour mesurer la température de la plaque supérieure (15, 1010, 1115) à travers le trou, le film mince (1020) étant disposé sur le dessous de la plaque supérieure (15, 1010, 1115).

4. Plaque de cuisson à induction selon l'une des revendications 1 à 3, où le premier capteur de température (1145) est prévu pour mesurer les températures d'une pluralité de parties du film mince (1020).

5. Plaque de cuisson à induction selon l'une des revendications 1 à 4, où le contrôleur (1040, 1840) est prévu pour déterminer s'il convient de maintenir la puissance de sortie de la bobine de travail (1050, 1850) à la puissance de sortie cible ou de réduire ladite puissance de sortie sur la base de la température mesurée du film mince (1020) et/ou de la température mesurée de la plaque supérieure (15, 1010, 1115).

6. Plaque de cuisson à induction selon l'une des revendications 1 à 5, où le contrôleur (1040, 1840) est prévu pour déterminer s'il convient de maintenir la puissance de sortie de la bobine de travail (1050, 1850) à la puissance de sortie cible ou de réduire la puissance de sortie sur la base d'une température mesurée du film mince (1020) supérieure ou égale à une première température seuil.

7. Plaque de cuisson à induction selon l'une des revendications 1 à 6, où le contrôleur (1040, 1840) est prévu pour déterminer s'il convient de maintenir la puissance de sortie de la bobine de travail (1050, 1850) à la puissance de sortie cible ou de réduire la puissance de sortie sur la base d'une température mesurée de la plaque supérieure (15, 1010, 1115) supérieure ou égale à une deuxième température seuil.

8. Plaque de cuisson à induction selon l'une des revendications 1 à 7, où le contrôleur (1040, 1840) est prévu pour suspendre le fonctionnement de la bobine de travail (1050, 1850) sur la base d'une température du film mince (1020) supérieure ou égale à une première température seuil prédéterminée ou d'une température de la plaque supérieure (15, 1010, 1115) supérieure ou égale à une deuxième température seuil prédéterminée.

9. Plaque de cuisson à induction selon l'une des revendications 1 à 8, où le contrôleur (1040, 1840) est prévu pour suspendre le fonctionnement de la bobine de travail (1050, 1850) ou pour maintenir la puissance de sortie à la valeur cible sur la base d'une température mesurée du film mince (1020) inférieure à la température mesurée de la plaque supérieure (15, 1010, 1115).

10. Plaque de cuisson à induction selon l'une des revendications 1 à 9, où le contrôleur (1040, 1840) est prévu pour déterminer si une partie centrale de l'objet cible est excentrée par rapport à une partie centrale de la bobine de travail (1050, 1850) sur la base d'une température mesurée du film mince (1020) ou d'une température mesurée de la plaque supérieure (15, 1010, 1115) dépassant une température seuil.

11. Procédé de commande de la puissance de sortie d'une bobine de travail (1050, 1850) pour chauffer un objet cible, ledit procédé comprenant :
le chauffage par induction d'un film mince (1020) et de l'objet cible par la bobine de travail (1050, 1850), le film mince (1020) étant prévu pour être placé entre la bobine de travail (1050, 1850) et l'objet cible ; et
la réception, en provenance d'un premier capteur de température (1145), de la température mesurée du film mince disposé sur le dessus de la plaque supérieure (15, 1010, 1115) et/ou sur le dessous de la plaque supérieure (15, 1010, 1115), la plaque supérieure (15, 1010, 1115) étant raccordée à la partie supérieure d'un caisson (25, 1125) et prévue pour supporter l'objet cible ;
**caractérisé en ce que** ledit procédé comprend en outre :
la réception, en provenance d'un deuxième capteur de température, de la température mesurée de la plaque supérieure (15, 1010, 1115), ladite plaque supérieure (15, 1010, 1115) supportant l'objet cible ; et
la commander de la puissance de sortie de la bobine de travail (1050, 1850) sur la base de la température mesurée du film mince (1020) et/ou de la température mesurée de la plaque supérieure (15, 1010, 1115).

12. Procédé selon la revendication 11, comprenant en outre :
la détermination s'il convient de maintenir la puissance de sortie de la bobine de travail (1050, 1850) à une puissance de sortie cible ou de réduire ladite puissance de sortie sur la base (i) d'une température du film mince (1020) mesurée par le premier capteur de température supérieure ou égale à une première température seuil et (ii) d'une température de la plaque supérieure (15, 1010, 1115) mesurée par le deuxième capteur de température supérieure ou égale à une deuxième température seuil,
la première température seuil étant supérieure à la deuxième température seuil.

13. Procédé selon la revendication 11 ou la revendication 12, comprenant en outre :
la suspension du fonctionnement de la bobine de travail (1050, 1850) si une température mesurée du film mince (1020) est supérieure ou égale à une première température seuil prédéterminée ou si une température mesurée de la plaque supérieure (15, 1010, 1115) est supérieure ou égale à une deuxième température seuil prédéterminée.

14. Procédé selon l'une des revendications 11 à 13, comprenant en outre :
la suspension du fonctionnement de la bobine de travail (1050, 1850) ou le maintien de la puissance de sortie à une valeur de puissance de sortie cible sur la base d'une température mesurée du film mince (1020) inférieure à la température mesurée de la plaque supérieure (15, 1010, 1115).

15. Procédé selon l'une des revendications 11 à 14, comprenant en outre :
la détermination si une partie centrale de l'objet cible est excentrée par rapport à une partie centrale de la bobine de travail (1050, 1850) sur la base d'une température mesurée du film mince (1020) ou d'une température mesurée de la plaque supérieure (15, 1010, 1115) dépassant une température seuil.
